**Europäisches Patentamt**

(19) **European Patent Office**

**Office européen des brevets**

(11) Veröffentlichungsnummer: **0 249 972**
**B1**

(12) # EUROPÄISCHE PATENTSCHRIFT

(45) Veröffentlichungstag der Patentschrift:
**19.09.90**

(51) Int. Cl.⁵: **H02G 15/18, B32B 15/08,**
**B32B 3/28**

(21) Anmeldenummer: **87108723.5**

(22) Anmeldetag: **16.06.87**

(54) Wickelbare Kabelmuffeneinlage und Herstellung derselben.

(30) Priorität: **19.06.86 DE 3620522**

(43) Veröffentlichungstag der Anmeldung:
**23.12.87 Patentblatt 87/52**

(45) Bekanntmachung des Hinweises auf die Patenterteilung:
**19.09.90 Patentblatt 90/38**

(84) Benannte Vertragsstaaten:
**AT BE CH DE FR GB IT LI NL SE**

(56) Entgegenhaltungen:
**EP-A- 0 025 691**
**EP-A- 0 120 475**
**DE-C- 539 612**
**FR-A- 522 546**
**US-A- 2 624 989**
**US-A- 3 879 249**

(73) Patentinhaber: **RXS Schrumpftechnik-Garnituren GmbH,**
**Profilstrasse 4, D-5800 Hagen 1(DE)**

(72) Erfinder: **Meltsch, Hans-Jürgen, Ing (grad.), Im**
**Wietloh 18 a, D-5840 Schwerte 4(DE)**

(74) Vertreter: **Fuchs, Franz-Josef, Dr.-Ing. et al,**
**Postfach 22 13 17, D-8000 München 22(DE)**

**Beschreibung**

Die Erfindung betrifft eine wickelbare Kabelmuffeneinlage aus einer glatten und einer gewellten, jeweils aus mehreren Materialschichten bestehende Verbundschicht, wobei diese Verbundschichten übereinander liegend angeordnet sind.

Aus der europäischen Patentanmeldung EP 0 120 475 ist eine wickelbare Kabelmuffeneinlage für eine schrumpfbare Kabelmuffe bekannt, bei der zwei übereinander liegende Verbundschichten angeordnet sind. Eine dieser Verbundschichten besitzt gewellte Form und überdeckt den gesamten abzudeckenden Bereich, während die zweite Verbundschicht eine glatte Form aufweist und nur im Mittelbereich auf der ersten Verbundschicht zwischen den beiden anpaßbaren Randbereichen der Kabelmuffeneinlage aufgebracht ist. Diese im Mittelbereich aufgebrachte Verbundschicht erhöht die Festigkeit und den Wärmeschutz, während die Randbereiche mit der bloßliegenden Wellung der Anpassung zwischen den Durchmesserunterschieden dienen. Dies bedeutet, daß für jeden Muffentyp eine spezielle Kabelmuffeneinlage vorrätig sein muß, die bezüglich Durchmesser und Länge festgelegt werden muß.

Für vorliegende Erfindung besteht nun die Aufgabe, eine Kabelmuffeneinlage zu schaffen, die in universeller Weise für alle vorkommenden Kabelmuffen verwendbar ist, wobei die vorgegebenen Bedingungen ebenfalls in glei cher Weise erfüllt werden müssen. Die gestellte Aufgabe wird nun mit Hilfe einer wickelbaren Kabelmuffeneinlage der eingangs erläuterten Art dadurch gelöst, die die Merkmale des Kennzeichens des Anspruchs 1 aufweist.

Weiterhin ist Aufgabe der Erfindung, ein Verfahren zur Herstellung einer solchen Kabelmuffeneinlage zu schaffen. Die Lösung dieser Aufgabe ergibt sich nach den im Patentanspruch 14 beschriebenen Merkmalen.

Die Vorteile der Kabelmuffeneinlage gegenüber dem bisherigen Stand der Technik bestehen nun in erster Linie darin, daß lediglich eine einzige Großfläche aus den für die Erfordernisse ausreichenden Verbundfolien herzustellen ist. Diese Großfläche kann in Flächenstücken oder in aufgerollter Form bereitgestellt werden, wobei lediglich die Breite der Großfläche durch die mögliche Fertigungsbreite vorgegeben ist. Dies bedeutet, daß bei Bedarf die gerade erforderliche Größe aus der vorhandenen Großfläche auszuschneiden ist und zwar mit den gerade notwendigen Abmessungen. Nachdem dieses Flächenstück ausgeschnitten ist, können außerdem frei und den Bedürfnissen genau angepaßt die Knicklinien für die beiden seitlichen Anpassungsbereiche bestimmt werden. Auch hier lassen sich die Abmessungen frei wählen, so daß zum Beispiel auch ungleiche Anpassungsstücke möglich sind, wenn beispielsweise Kabel mit ungleichen Durchmessern eingeführt werden. Aus diesen Beispielen heraus läßt sich erkennen, daß diese Kabelmuffeneinlage gemäß der Erfindung in universeller Weise für alle möglichen Einsatzfälle optimal angepaßt werden kann.

Die Erfindung wird nun anhand von fünf Figuren näher erläutert.

Figur 1 zeigt ein bereits zugeschnittenes Flächenstück in Draufsicht und

Figur 2 zeigt das Flächenstück nach Figur 1 in Seitenansicht.

Figur 3 zeigt einen Ausschnittsbereich des Flächenstükkes im Sickenbereich.

Figur 4 zeigt eine Übersicht über den Zuschnittvorgang.

Figur 5 zeigt eine aufgewickelte Kabelmuffeneinlage gemäß der Erfindung.

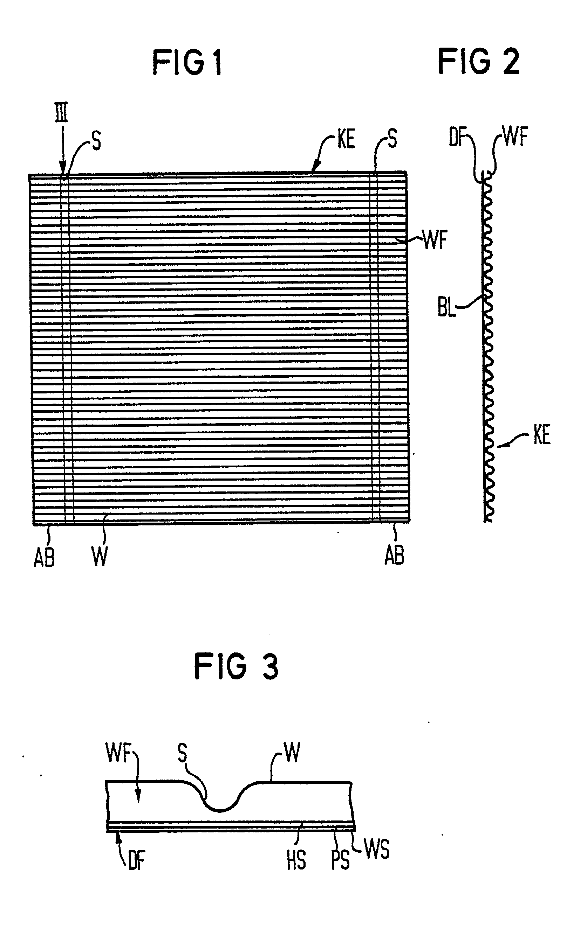

In der Figur 1 sind in Draufsicht auf die aus einer Verbundschicht bestehenden Wellfolie WF die bestimmenden Zusammenhänge der Kabelmuffeneinlage KE erkennbar. Diese Wellfolie WF ist auf der darunter liegenden, hier nicht sichtbaren Deckfolie fest aufgebracht, wobei die hier gezeigten Abmessungen bereits einer kompletten Kabelmuffeneinlage KE entsprechen sollen. Die Wellung verläuft dabei wie bei allen Kabelmuffeneinlagen KE der Erfindung in Achsrichtung des später zu umwickelnden Gegenstandes, zum Beispiel der Kabel, und wird vorzugsweise beim Umwickeln nach einwärts gerichtet, so daß nach außen die glatte Deckfolie DF sichtbar wird. Beim Aufschrumpfen der schrumpfbaren Umhüllung ergibt sich somit eine glatte Oberfläche. Da der zu umhüllende Gegenstand meist einen anderen Durchmesser aufweist als die eingeführten Gegenstände, muß zwischen diesen unterschiedlichen Durchmessern eine Anpassung erfolgen, die durch Zusammenpressen der beiden äußeren Anpassungsbereiche erfolgt. Dieses Zusammenpressen wird erleichtert durch eine definierte Bruchkante entlang von Sicken S, die in die Wellung W der Wellfolie WF eingebracht werden. Dies erfolgt mit einem beliebigen Falzwerkzeug, das unter Umständen erwärmt wird, so daß die Kunststoffschichten in der Verbundschicht leichter verformbar werden. Diese Sicken S können an beliebiger Stelle eingebracht werden, so daß sich die Längen der Anpassungbereiche AB dadurch beliebig bestimmen und anpassen lassen.

Die Figur 2 zeigt eine Queransicht auf die zugeschnittene Kabelmuffeneinlage KE, wodurch der Aufbau aus den beiden Verbundschichten, der Deckfolie DF und der Wellfolie WF deutlich wird. Die gegenseitige Haftung erfolgt zweckmäßigerweise durch Haftfolien der beiden Verbundschichten, die sich gegenüber liegen und entlang der gemeinsamen Berührungslinien BL miteinander verklebt oder verschmolzen sind.

Die Figur 3 zeigt die in Figur 1 angedeutete Ansicht im Bereich einer quer verlaufenden Sicke S. Es wird deutlich, daß die auf die glatte Deckfolie DF aufgebrachte Wellfolie WF eingedellt ist, so daß hier in Richtung dieser Sicke S die Wellung W geschwächt bzw. unterbrochen ist. Auf diese Weise läßt sich entlang dieser Sicke S die Kabelmuffeneinlage leicht abknicken und dadurch entsprechend anpassen. Weiter hin geht aus dieser Figur 3 hervor, daß die als Deckfolie DF ausgeführte Verbundfolie zum Beispiel aus drei Einzelschichten, einer Haftschicht HS, einer Permeationsschutzschicht PS und einer Wärmeschutzschicht WS, besteht. Dies gilt auch entsprechend für die Wellfolie WF, wobei die Anzahl und die Stärke der Einzelschichten unterschiedlich sein kann. Als Haftschicht HS wird ein schmelzbarer Kunststoff, vorzugsweise Polyäthylen, verwendet, wobei die Schichtstärke vorzugsweise zwischen 15 bis 40 μm beträgt. Die Permeationsschutzschicht PS besteht vorzugsweise aus Metall, beispielsweise aus Aluminium, und ist für die Deckfolie DF zwischen vorzugsweise 15 bis 25 μm und für die Wellfolie WF zwischen 30 bis 40 μm stark. Die darüber liegende Wärmeschutzschicht WS besteht wiederum aus einem Kunststoff, vorzugsweise aus Polyester (PETP) und ist in einer Stärke von 10 bis 80 μm aufgebracht. Bei der Deckfolie DF beträgt [vorzugsweise] die Stärke der Wärmeschutzschicht WS [–] 10 bis 15μm und bei der Wellfolie WF beträgt sie vorzugsweise 70 bis 80 cm. Ein typisches Ausführungsbeispiel für eine Kabelmuffeneinlage weist folgende Verbundschichten auf:

Deckfolie: Haftschicht HS aus einer 25 μm starken Schicht aus Polyethylen
Permeationsschutzschicht PS aus einer 20 μm starken Schicht aus Aluminium
Wärmeschutzschicht WS aus einer 12 μm starken Schicht aus Polyester (PETP)
Wellfolie: Haftschicht HS aus einer 25 μm starken Schicht aus Polyethylen
Permeationsschutzschicht PS aus einer 35 μm starken Schicht aus Aluminium
Wärmeschutzschicht WS aus einer 75 μm starken Schicht aus Polyester (PETP)

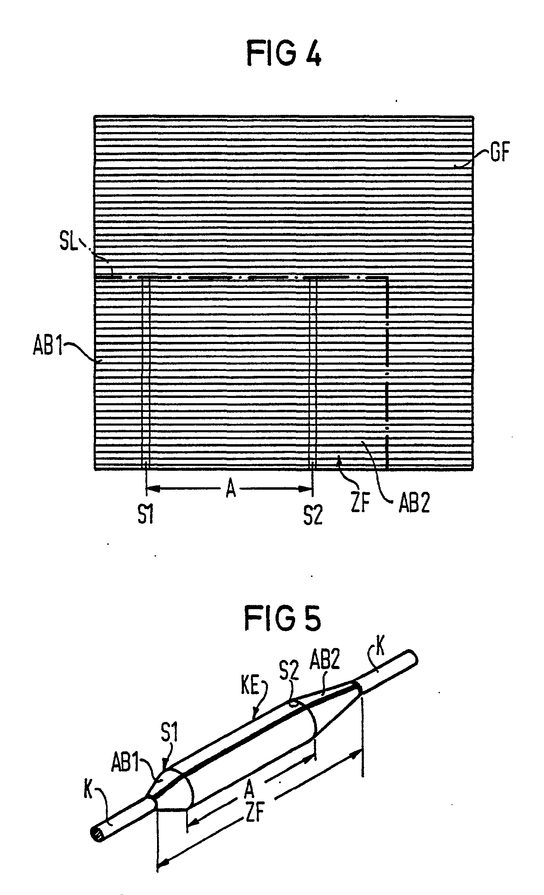

Die Figur 4 zeigt nun die universelle Anpassungsmöglichkeit der Kabelmuffeneinlage KE gemäß der Erfindung. So ist lediglich eine Großfläche GF aus den beiden bereits zusammenhaftenden Verbundschichten DF und WF zu erstellen, aus der bzw. von der die gerade erforderliche Zuschnittfläche ZF aus- bzw. abgeschnitten wird. Die bereitzustellende Großfläche GF ist nur bestimmt von den Herstellungsgegebenheiten, das heißt von den möglichen Abmessungen der Herstellungsmaschinen. Diese hergestellte, im Aufbau fertige Großfläche GF wird dann entweder als Flächenteil oder in aufgerollter Form gelagert, bis bei Bedarf der entsprechende Zuschnitt erfolgt. Damit entfällt die Fertigung und Lagerhaltung von verschiedenen Typen. Nach dem Zuschnitt entlang der Schnittlinie SL kann außerdem noch die Länge des Mittelteils für die Kabelmuffeneinlage KE durch entsprechende Wahl des Abstandes A der querverlaufenden Sicken S1 und S2 frei bestimmt werden, wobei zusätzlich die Möglichkeit besteht, die Anpassungsbereiche AB1 und AB2 entsprechend den vorliegenden Verhältnissen ungleich in der Länge zu wählen. Auf diese Weise ist auch eine optimale Anpassung an verschiedene Durchmesserübergänge an beiden Seiten ermöglicht.

Die Figur 5 zeigt nun schließlich schematisch eine auf erfindungsgemäße Weise hergestellte Kabelmuffeneinlage KE, die zum Beispiel über einem Kabelspleiß mit den eingeführten Kabeln K aufgewickelt ist und die entlang der eingebrachten Sicken S1 und S2 durch Zusammenpressen der beiden äußeren Enden der Zuschnittsfläche ZF auf die beiden Duchmesser der beiden Kabel K abgewinkelt und dadurch angepaßt ist. Hierbei ist skizzenhaft angedeutet, daß die beiden Anpassungsbereiche AB1 und AB2 ungleich lang sind. Über diese an gepaßte Kabelmuffeneinlage KE kann nun in einfacher Weise eine schrumpfbare Umhüllung dichtend aufgebracht werden, wobei die Kabelmuffeneinlage KE die gewünschte Stützung über den gesamten Bereich der Kabelmuffe hin ergibt.

## Patentansprüche

1. Wickelbare Kabelmuffeneinlage aus einer glatten (Deckfolie, DF) und einer gewellten (Wellfolie, WF), jeweils aus mehreren Materialschichten bestehende Verbundschicht, wobei diese Verbundschichten (DF, WF) übereinander liegend angeordnet sind, dadurch gekennzeichnet, daß die Wellfolie (WF) der beiden zusammenhaftenden aus einer beliebig groß hergestellten Großfläche (GF) herausgeschnittenen Verbundschichten an beliebiger Stelle quer zur Wellung (W) mit zwei durchgehenden Sicken (S) versehen ist, daß die beiden Verbundschichten (DF, WF) zur Kabelmuffeneinlage wickelbar sind, wobei die an den äußeren Rändern befindlichen Anpassungsbereiche (AB) der Verbundschichten (DF, WF) entlang der eingebrachten Sicken (S) zur Anpassung von Durchmesserunterschieden abknickbar sind und daß vorzugsweise die glatte Deckfolie (DF) außen liegt.

2. Wickelbare Kabelmuffeneinlage nach Anspruch 1, **dadurch gekennzeichnet**, daß die Verbundschichten (DF, WF) vorzugsweise aus drei Materialschichten bestehen, wobei eine Schicht als Haftschicht (HF), eine als Permeationsschutzschicht (PS) und eine als Wärmeschutzschicht (WS) vorgesehen sind.

3. Wickelbare Kabelmuffeneinlage nach einem der vorhergehenden Ansprüche, **dadurch gekennzeichnet**, daß die beiden Verbundschichten (DF, WF) mit jeweils einer durch Wärmeeinwirkung verschmelzbaren Haftschicht (HF), versehen sind und daß die beiden Verbundschichten (DF, WF) durch diese verschmelzbaren Haftschichten (HF) miteinander verbunden sind.

4. Wickelbare Kabelmuffeneinlage nach einem der vorhergehenden Ansprüche, **dadurch gekennzeichnet**, daß die Wärmeschutzschicht (WS) vorzugsweise aus Polyester (PETP) besteht.

5. Wickelbare Kabelmuffeneinlage nach einem der vorhergehenden Ansprüche, **dadurch gekennzeichnet**, daß die Permeationsschutzschicht (PS) vorzugsweise aus Aluminium besteht.

6. Wickelbare Kabelmuffeneinlage nach einem der vorhergehenden Ansprüche, **dadurch gekennzeichnet**, daß die Haftschicht (HF) vorzugsweise aus Polyethylen besteht.

7. Wickelbare Kabelmuffeneinlage nach einem der vorhergehenden Ansprüche, **dadurch gekennzeichnet**, daß die Stärke der Wärmeschutzschicht (WS) vorzugsweise 10 bis 80 μm beträgt.

8. Wickelbare Kabelmuffeneinlage nach einem der vorhergehenden Ansprüche, **dadurch gekennzeichnet,** daß die Stärke der Permeationsschutzschicht (PS) vorzugsweise 15 bis 40 µm beträgt.

9. Wickelbare Kabelmuffeneinlage nach einem der vorhergehenden Ansprüche, **dadurch gekennzeichnet,** daß die Stärke der Haftschicht (HF) vorzugsweise 15 bis 40 µm beträgt.

10. Wickelbare Kabelmuffeneinlage nach einem der vorhergehenden Ansprüche, **dadurch gekennzeichnet,** daß die Stärken der entsprechenden Materialschichten beider Verbundschichten (DF, WF) gleich sind.

11. Wickelbare Kabelmuffeneinlage nach einem der Ansprüche 1 bis 9, **dadurch gekennzeichnet,** daß die Stärken der Materialschichten der Wellfolie (WF) ungleich der Stärken der entsprechenden Materialschichten der Deckfolie (DF) sind.

12. Wickelbare kabelmuffeneinlage nach Anspruch 11, **dadurch gekennzeichnet,** daß die Stärke der Wärmeschutzschicht (WS) bei der Deckfolie (DF) vorzugsweise 10 bis 15 µm und bei der Wellfolie (WF) vorzugsweise 70 bis 80 µm beträgt.

13. Wickelbare Kabelmuffeneinlage nach einem der vorhergehenden Ansprüche, **dadurch gekennzeichnet,** daß die Stärke der Permeationsschutzschicht (PS) bei der Deckfolie (DF) vorzugsweise 15 bis 25 µm und bei der Wellfolie (WF) vorzugsweise 30 bis 40 µm beträgt.

14. Verfahren zur Herstellung einer wickelbaren Kabelmuffeneinlage nach einem der vorhergehenden Ansprüche, **dadurch gekennzeichnet,** daß die Fläche für die herzustellende Kabelmuffeneinlage (KE) aus einer glatten und einer gewellten Verbundschicht (DF, WF) bestehenden Großfläche (GF) in erforderlicher Größe herausgeschnitten wird, daß die Zuschnittfläche (ZF) auf der Seite der Wellfolie (WF) mit den nach den gewünschten Erfordernissen gewählten Sicken (S) versehen wird, daß die Zuschnittfläche (ZF) über dem zu umhüllenden Gegenstand aufgewickelt und schließlich entlang der eingebrachten, nun umlaufenden Sicken (S) durch Zusammendrücken der Anpassungsbereiche (AB1, AB2) abgeknickt wird.

15. Verfahren nach Anspruch 14, **dadurch gekennzeichnet,** daß die Sicken (S) mittels eines erwärmten Werkzeuges eingebracht werden.

**Claims**

1. Wrap-around cable sleeve liner made from a smooth (covering sheet, DF) and a corrugated (corrugated sheet, WF) sandwich layer each consisting of a plurality of layers of material, these sandwich layers (DF, WF) being disposed lying one over the other, characterized in that the corrugated sheet (WF) of the two cohering sandwich layers cut from a large area (GF) made to any size is provided at any point with two continuous indentations (S) transverse to the corrugation (W), in that the two sandwich layers (DF, WF) can be wrapped to form the cable sleeve liner, it being possible for the adapting areas (AB) of the sandwich layers (DF, WF) located at the outer edges to be bent along the indentations (S) introduced for adaptation to differences in diameter, and in that the smooth covering sheet (DF) preferably lies outside.

2. Wrap-around cable sleeve liner according to Claim 1, characterized in that the sandwich layers (DF, W) preferably consist of three layers of material, one layer being provided as an adhesive layer (HF), one as a permeation protection layer (PS), and one as a thermal protection layer (WS).

3. Wrap-around cable sleeve liner according to one of the preceding claims, characterized in that the two sandwich layers (DF, WF) are each provided with an adhesive layer (HF) which can be fused through the action of heat, and in that the two sandwich layers (DF, WF) are connected to one another by these fusible adhesive layers (HF).

4. Wrap-around cable sleeve liner according to one of the preceding claims, characterized in that the thermal protection layer (WS) preferably consists of polyester (PETP).

5. Wrap-around cable sleeve liner according to one of the preceding claims, characterized in that the permeation protection layer (PS) preferably consists of aluminium.

6. Wrap-around cable sleeve liner according to one of the preceding claims, characterized in that the adhesive layer (HF) preferably consists of polyethylene.

7. Wrap-around cable sleeve liner according to one of the preceding claims, characterized in that the thickness of the thermal protection layer (WS) is preferably 10 to 80 µm.

8. Wrap-around cable sleeve liner according to one of the preceding claims, characterized in that the thickness of the permeation protection layer (PS) is preferably 15 to 40 µm.

9. Wrap-around cable sleeve liner according to one of the preceding claims, characterized in that the thickness of the adhesive layer (HF) is preferably 15 to 40 µm.

10. Wrap-around cable sleeve liner according to one of the preceding claims, characterized in that the thicknesses of the corresponding layers of material of the two sandwich layers (DF, WF) are the same.

11. Wrap-around cable sleeve liner according to one of Claims 1 to 9, characterized in that the thicknesses of the layers of material of the corrugated sheet (WF) are different from the thicknesses of the corresponding layers of material of the covering sheet (DF).

12. Wrap-around cable sleeve liner according to Claim 11, characterized in that the thickness of the thermal protection layer (WS) is preferably 10 to 15 µm for the covering sheet (DF) and preferably 70 to 80 µm for the corrugated sheet (WF).

13. Wrap-around cable sleeve liner according to one of the preceding claims, characterized in that the thickness of the permeation protection layer (PS) is preferably 15 to 25 µm for the covering sheet (DF) and preferably 30 to 40 µm for the corrugated sheet (WF).

14. Method for the production of a wrap-around cable sleeve liner according to one of the preceding claims, characterized in that the area for the cable sleeve liner (KE) to be produced is cut to the required size from a large area (GF) consisting of a smooth and a corrugated sandwich layer (DF, WF), in that on the side of the corrugated sheet (WF) the cut area (ZF) is provided with the indentations (S) chosen according to the desired requirements, in that the cut area (ZF) is wrapped around the object to be covered, and lastly is bent along the indentations (S) introduced which now run circumferentially by compressing the adapting areas (AB1, AB2).

15. Method according to Claim 14, characterized in that the indentations (S) are introduced by means of a heated tool.

**Revendications**

1. Insert pouvant être enroulé pour manchon de câble, constitué par une couche composite lisse (feuille de revêtement, DF) et une couche composite ondulée (feuille ondulée, WF), qui sont constituées chacune de plusieurs couches de matériau, ces couches composites (DF, WF) étant superposées, caractérisé par le fait que la feuille ondulée (WF) des deux couches composites, qui adhèrent l'une à l'autre et sont découpées à partir d'une surface étendue (GF), fabriquée avec une étendue quelconque, comporte, en un emplacement quelconque, transversalement par rapport à l'ondulation (W), deux moulures continues (S), que les deux couches composites (DF, WF) peuvent être enroulées pour former l'insert pour manchon de câble, les zones d'adaptation (AB), situées au niveau des bords extérieurs, des couches composites (DF, WF) pouvant être repliées selon des moulures en renforcement (S) pour obtenir une adaptation de différences de diamètres, et que de préférence la feuille de revêtement lisse (DF) est située à l'extérieur.

2. Insert pouvant être enroulé pour manchon de câble suivant la revendication 1, caractérisé par le fait que les couches composites (DF, WF) sont constituées de préférence par trois couches de matériau, une couche étant prévue en tant que couche adhésive (HF), une couche en tant que couche (PS) de protection contre une perméation et une couche en tant que couche de protection thermique (WS).

3. Insert pouvant être enroulé pour manchon de câble suivant l'une des revendications précédentes, caractérisé par le fait que les deux couches composites (DF, WF) comportent respectivement une couche adhésive (HF) pouvant fondre sous l'action de la chaleur, et que les deux couches composites (DF, WF) sont reliées entre elles par ces couches adhésives fusibles (HF).

4. Insert pouvant être enroulé pour manchon de câble suivant l'une des revendications précédentes, caractérisé par le fait que la couche de protection thermique (WS) est constituée de préférence par du polyester (PETP).

5. Insert pouvant être enroulé pour manchon de câble suivant l'une des revendications précédentes, caractérisé par le fait que la couche (PS) de protection contre une perméation est réalisée de préférence en aluminium.

6. Insert pouvant être enroulé pour manchon de câble suivant l'une des revendications précédentes, caractérisé par le fait que la couche adhésive (HF) est constituée de préférence par du polyéthylène.

7. Insert pouvant être enroulé pour manchon de câble suivant l'une des revendications précédentes, caractérisé par le fait que l'épaisseur de la couche de protection thermique (WS) est comprise de préférence entre 10 et 80 mm.

8. Insert pouvant être enroulé pour manchon de câble suivant l'une des revendications précédentes, caractérisé par le fait que l'épaisseur de la couche (PS) de protection contre une perméation est comprise de préférence entre 15 et 40 mm.

9. Insert pouvant être enroulé pour le manchon de câble suivant l'une des revendications précédentes, caractérisé par le fait que l'épaisseur de la couche adhésive (HF) est comprise de préférence entre 15 et 40 mm.

10. Insert pouvant être enroulé pour manchon de câble suivant l'une des revendications précédentes, caractérisé par le fait que les épaisseurs des couches correspondantes de matériau des deux couches composites (DF, WF) sont égales.

11. Insert pouvant être enroulé pour manchon de câble suivant l'une des revendications 1 à 9, caractérisé par le fait que les épaisseurs des couches de matériau de la feuille ondulée (WF) diffèrent des épaisseurs des couches de matériau correspondantes de la feuille de revêtement (DF).

12. Insert pouvant être enroulé pour manchon de câble suivant la revendication 11, caractérisé par le fait que l'épaisseur de la couche de protection thermique (WS) est comprise de préférence entre 10 et 15 mm dans le cas de la feuille de revêtement (DF) et de préférence entre 70 et 80 mm dans le cas de la feuille ondulée (WF).

13. Insert pouvant être enroulé pour manchon de câble suivant l'une des revendications précédentes, caractérisé par le fait que l'épaisseur de la couche (PS) de protection contre une perméation est comprise de préférence entre 15 et 25 mm dans le cas de la feuille de revêtement (DF) et de préférence entre 30 et 40 mm dans le cas de la feuille ondulée (WF).

14. Procédé pour fabriquer un insert pouvant être enroulé pour manchon de câble suivant l'une des revendications précédentes, caractérisé par le fait qu'on obtient, avec la taille nécessaire, la surface pour l'insert (KE) pour manchon de câble, devant être fabriqué, par découpage à partir d'une surface étendue (GF) constituée par une couche composite lisse (DF) et par une couche composite ondulée (WF), qu'on aménage, dans la surface découpée (ZF), du côté de la feuille ondulée (WF), des moulures (S) choisies en fonction des exigences désirées, qu'on enroule la surface découpée (ZF) autour de l'objet devant être enveloppé et qu'on la replie finalement le long des moulures en creux (S) maintenant circonférentielles en comprimant les zones d'adaptation (AB1, AB2).

15. Procédé suivant la revendication 14, caractérisé par le fait qu'on ménage les moulures (S) à l'aide d'un outil chauffé.

# FIG 1

# FIG 2

# FIG 3

# FIG 4

# FIG 5